Europäisches Patentamt

European Patent Office

Office européen des brevets

(11) Publication number: **0 240 666 B1**

# EUROPEAN PATENT SPECIFICATION

(45) Date of publication of patent specification: **23.12.92**  (51) Int. Cl.⁵: **G06K 11/06**, G06K 11/00

(21) Application number: **87101824.8**

(22) Date of filing: **10.02.87**

(54) **Coordinate input sheet.**

(30) Priority: **10.02.86 JP 27088/86**
**10.02.86 JP 27087/86**

(43) Date of publication of application:
**14.10.87 Bulletin 87/42**

(45) Publication of the grant of the patent:
**23.12.92 Bulletin 92/52**

(84) Designated Contracting States:
**AT BE CH DE ES FR GB GR IT LI LU NL SE**

(56) References cited:
**US-A- 4 080 514**
**US-A- 4 484 026**

**PATENT ABSTRACTS OF JAPAN vol. 7, no. 121 (P-169)(1266), 25th May 1983; & JP - A - 5837782**

(73) Proprietor: **OMRON TATEISI ELECTRONICS CO.**
**10, Tsuchido-cho Hanazono Ukyo-ku Kyoto 616(JP)**

(72) Inventor: **Koizumi, Haruyuki c/o Omron Tateisi Electronics Co**
**20, Igadera Shimo-Kaiinji**
**Nagaokakyo-City Kyoto 617(JP)**
Inventor: **Hashizume, Shinichi Omron Tateisi Electronics Co.**
**20, Igadera Shimo-Kaiinji**
**Nagaokakyo-City Kyoto 617(JP)**
Inventor: **Omae, Koichi c/o Omron Tateisi Electronics Co.**
**20, Igadera Shimo-Kaiinji**
**Nagaokakyo-City Kyoto 617(JP)**
Inventor: **Nakabayashi, Sanji Omron Tateisi Electronics Co.**
**20, Igadera Shimo-Kaiinji**
**Nagaokakyo-City Kyoto 617(JP)**

(74) Representative: **WILHELMS, KILIAN & PARTNER Patentanwälte**
**Eduard-Schmid-Strasse 2**
**W-8000 München 90(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a coordinate input pad used to specify respective coordinate input data especially when a figure is input to a computer in a so-called digitizer as an input device for written letters and figures, or when a partial area of a print matter is designated and copied by a copy machine.

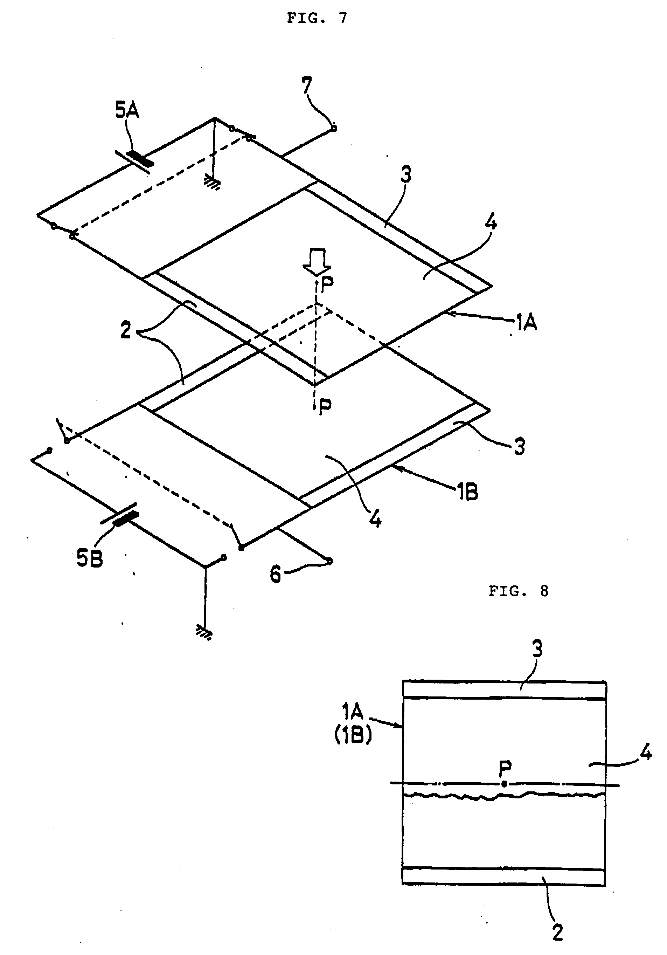

The digitizer, the principle of which is shown in Fig. 7, using the coordinate input pad includes two coordinate input sheets 1A, 1B, each of which includes an insulating sheet and opposing electrodes 2, 3 each being disposed at a corresponding end of the insulating sheet, a surface resistor 4 formed between the electrodes, the sheets 1A, 1B overlapping so that the respective inter-electrode directions are deviated 90 degrees. For example, the lower coordinate input sheet 1B is used for detecting the X-axis coordinate position of a finger press point to be described below while the upper coordinate input sheet 1A is used for detecting the Y-axis coordinate position.

In more detail, when any particular point on input sheet 1A is pressed in Fig. 7 and a voltage 5A is applied across the sheet 1A, a division voltage at the point P on sheet 1A is taken as the X-axis coordinate position data from a division voltage output terminal 6 of lower coordinate input sheet 1B. Next, by application of a voltage 5B to lower coordinate input sheet 1B, the division voltage voltage at point P on sheet 1B is taken as the Y-axis coordinate position data from a division voltage output terminal 7 of upper coordinate input sheet 1A. Thus, such time-division operation provides the X-Y coordinates of the point P where the finger press is applied.

The division voltage at the input point on upper coordinate input sheet 1A will be considered. So long as the linearity of the surface resistance 4 between electrodes 2 and 3 is maintained, the division voltage at the finger press input point exhibits a value inversely proportional to the distance from + electrode 2 concerning the voltage between the inter-electrode voltage (for example, 5V). Namely, if the point is at the middle point between electrodes 2 and 3, a value of 2.5V is exhibited.

However, in fact, the surface resistance 4 is influenced by its possible uneven printing or the like and exhibits no correct resistance linearity. Thus the above 2.5V line is deviated, as shown by a curved line, from the rightful position shown by a dot-dashed line in Fig. 8, so that even if the operator has pressed the midpoint correctly, incorrect coordinate data would be often input. This applies likewise to lower coordinate input sheet 1B.

A coordinate input device of this kind and according to the preamble of claims 1 and 2 is known from US-A-4 448 026.

The problem outlined above is solved by a coordinate input device according to claim 1 or claim 2.

In the device of claim 1 the potentials of one or more respective correction electrodes are measured before the actual use of the coordinate input sheet, the position (distance) occupied by these correction electrodes between the opposing electrodes and the measured value of the potential are compared to read a deviation (error) in the resistance value of the surface resistance. Consenquently, if the data to be read is previously stored as correction data in the digitizer, this data can be used to compensate for and correct the finger press input point coordinate data output from the coordinate input sheet. As a result, variations in the surface resistance of the sheet is absorbed in units of a digitizer, the linearity of the surface resistance is improved, and finger press input point coordinates can be input correctly to a computer, etc.

In the device of claim 2, if the linearity of the surface resistance of the coordinate input sheet is damaged, for example, if a deficit voltage such as 2.3V would at the middle point between the opposing electrodes although a potential of 2.5V should naturally be obtained, a voltage to cancel the shortage is applied from the auxiliary electrodes to thereby eliminate a deviation (error) in the resistance value of the surface resistance, and to improve the linearity to input correct finger press point coordinates to a computor, etc.

Now, embodiments of this invention will be described with reference to the accompanying drawings, in which:

Fig. 1 is a front view of one embodiment of a coordinate input sheet,

Fig. 2 is a schematic showing an example used wherein two coordinate input sheets of Fig. 1 are connected to a digitizer,

Fig. 3 is a plan view showing a second embodiment of a coordinate input sheet,

Fig. 4 is a diagram of an equivalent circuit of Fig. 1,

Fig. 5 is a plan view of an embodiment in which the auxiliary resistor of Fig. 3 is replaced by an operational amplifier,

Fig. 6 is a plan view of an embodiment where the auxiliary resistor of Fig. 3 is replaced by an external resistor,

Fig. 7 is a schematic diagram for explaining the detection principle of a digitizer using a prior art coordinate input sheet, and

Fig. 8 is a plan view of the coordinate input sheet of Fig. 7.

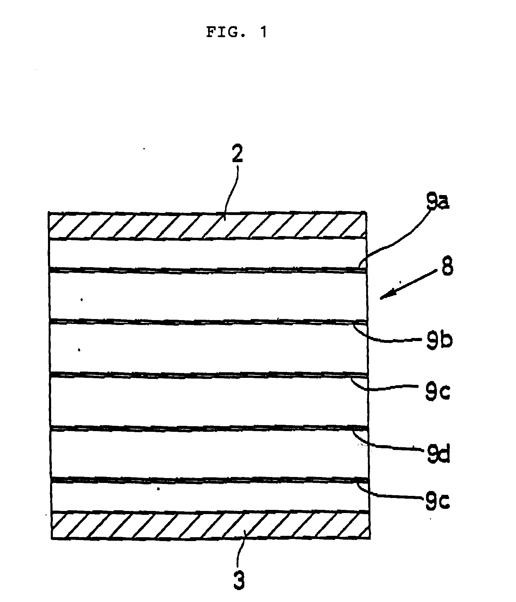

Fig. 1 shows a coordinate input sheet 8 in which stripe-like correction electrodes 9a-9e are disposed at appropriate spacings so as to be parallel to electrodes 2, 3 on the effective area portion of the surface resistance 4. In the Figure, five correction electrodes are provided, but either one or five or more such electrodes may be provided. The correction electrodes 9a-9e only read the potential as described later, and they may be thin.

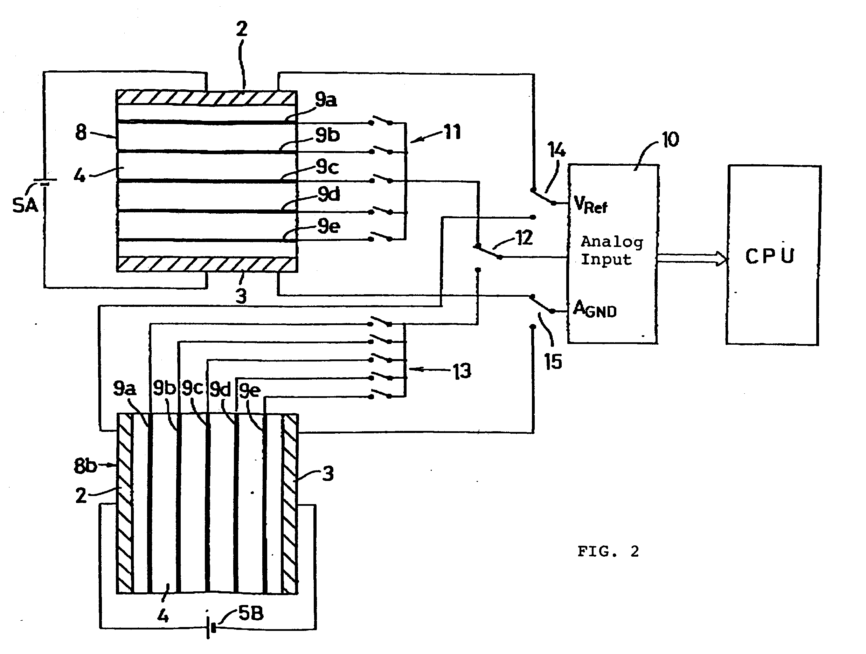

Fig. 2 shows that a total of two coordinate input sheets having the above structure is used for upper and lower coordinate input sheets 8A and 8B which are connected to a digitizer A/D converter 10, and a central processing unit CPU.

In Fig. 2, before actual use of the respective sheets, 8A, 8B, the voltages of correction electrodes 9a-9e are individually measured. In more detail, as shown, under the condition where the correction electrodes 9a-9e of the upper coordinate input sheet 8A are connected via a group of switches 11 to analog input terminals of an A/B converter 10 and a voltage 5A is applied across both electrodes 2, 3. The switches 11 are then switched on one by one to take the respective potentials of the correction electrodes 9a-9e. Since the positions of respective correction electrodes 9a-9e between the electrodes 2, 3 are known, the respective potentials are written into CPU using the positions as addresses and then stored in a memory. Next, a selector switch 12 is switched to cause a similar storage operation to be performed on the lower coordinate input sheet 8B using a group of switches 13.

When the above is completed, all the contacts of the switch groups 11, 13 are switched off to disconnect the analog input terminals from the correction electrodes 9a-9e and to proceed to predetermined finger contact operations such as figure inputting.

In this case, X-Y changeover switches 14, 15 are switched to take the X-axis coordinate positions from lower coordinate input sheet 8B and the Y-axis coordinate position from the upper coordinate input sheet 8A, and these positions are delivered via A/D converter 10 to the CPU.

The CPU corrects the newly input X- and Y-axis finger contact input point coordinate data from the stored potentials and positions of correction electrodes 9a-9e, calculates the actually pressed position, and send this as a coordinate point signal to the computer.

As described above, according to this embodiment, the potentials of correction electrodes 9a-9e are stored as data for correction processing in accordance with the previously used individual coordinate input sheets 8A, 8B. The stored data is used to correct the finger press point coordinates at CPU to obtain the finger press coordinates correctly.

It is to be noted that while electrodes 2, 3 are shown cross-hatched in Figs. 1 and 2, this does not represent cross-section, but is intended to clarify the presence of electrodes 2, 3 visually.

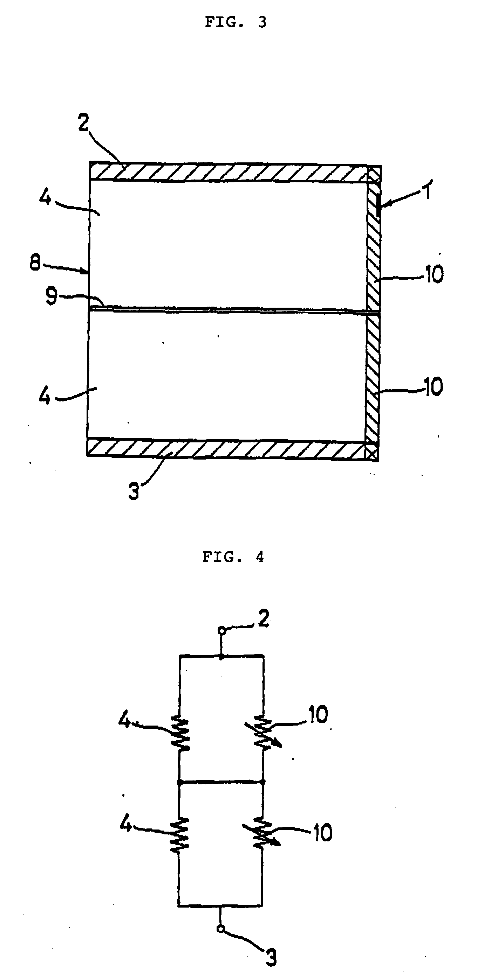

Now, a second embodiment of this invention will be described with reference to Figs. 3-6.

In a coordinate input sheet 8 shown in Fig. 3, a stripe-like correction electrode 9 is disposed parallel to main electrodes 2, 3 on a surface resistance 4 portion between electrodes 2, 3. This auxiliary electrode 9 is connected to an auxiliary resistor (adjustable resistor) 10 printed at one end of the sheet. Resistor 10 is also connected to electrodes 2, 3.

Thus, if a voltage is applied across electrodes 2, 3 a voltage is also applied via resistor 10 to auxiliary electrode 9. The potential at the position corresponding to auxiliary electrode 9 is previously measured by other measurement devices. If the potential at this position is different from a designated potential, laser trimming is performed on auxiliary resistor 10, as shown in the arrow 1, the value of auxiliary resistor 10 is changed, and the voltage applied to auxiliary electrode 9 is corrected to obtain the designated potential.

It will be clearly understood that such a structure is represented by Fig. 4 wherein the circuit resistance of Fig. 3 is rewritten to an equivalent circuit, auxiliary resistor 10 serves as a variable resistor which is adjusted for potential adjustment. This improves the non-linearity of potential distribution on surface resistor 4 due to uneven printing of the surface resistance 4, etc.

The portions where the resistance is adjusted by laser trimming are not limited to those shown and are selected in accordance with the positions where the linearity of the surface resistance fails. Also, the position where the auxiliary electrode 9 is disposed and the number of auxiliary electrodes 9 used are not limited.

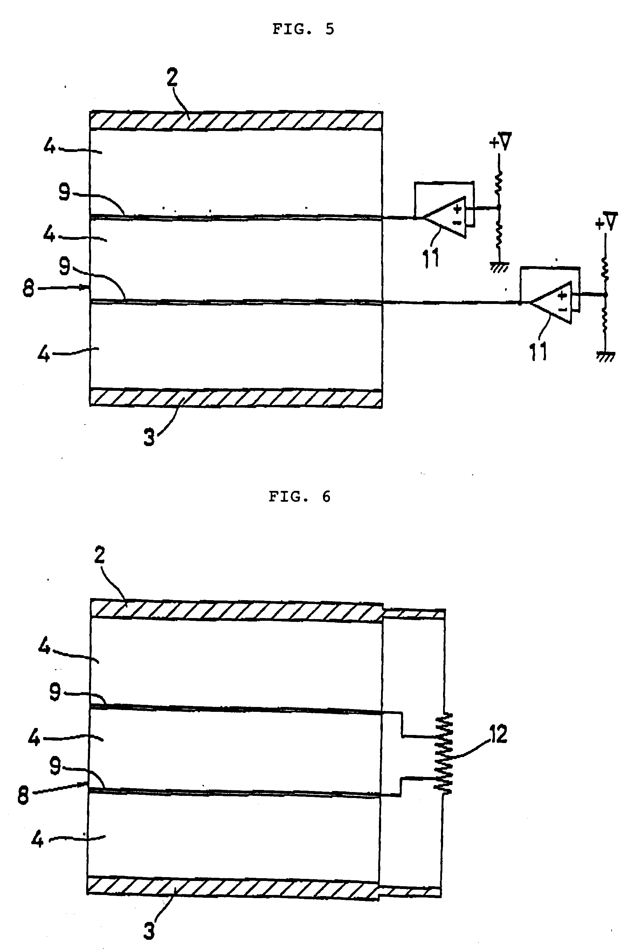

Fig. 5 shows two auxiliary electrodes 9 to which an external source of power applies a set voltage via an operational amplifier 11 instead of auxiliary resistor 10 of Fig. 3.

Fig. 6 shows an external resistor 12 connected to electrodes 2, 3 instead of the auxiliary electrode with the division voltage from the auxiliary electrode 12 being applied to auxiliary electrodes 9.

As described above, according to these embodiments, the non-linearity of a potential distribution on the surface resistor 4 is improved by application of an voltage to auxiliary electrodes 9, so that the coordinate output from the finger pressure input point is correct.

It is to be noted that while electrodes 2, 3 and auxiliary resistor 10 are shown cross-hatched in Figs. 1-4, this does not express the cross-section and is only intended to clarify the presence of electrodes 2, 3 and auxiliary resistor 10 visually.

## Claims

1. A coordinate input device comprising a first flexible insulating sheet (8a) and a second flexible insulating sheet (8b), the first flexible insulating sheet (8a) being provided with first opposing electrodes (2, 3) at two opposing edges thereof and a first surface resistor (4) extending between the first electrodes and facing the second flexible insulating sheet (8b), the second flexible insulating sheet (8b) being provided with second opposing electrodes (2, 3) at two opposing edges thereof and a second surface resistor (4) extending between the second electrodes and facing the first flexible insulating sheet, said edges and electrodes of the first flexible insulating sheet extending at right angles with respect to those of the second flexible insulating sheet, and means for determining X and Y coordinates of a point of contact between the first and second surface resistors (4) which is caused by pressing the first and second flexible sheets against each other at a certain point, said X and Y coordinates being determined from a division voltage of a voltage applied between said first or second opposing electrodes (2, 3), said division voltage being defined by the position of the point of contact between the first and second surface resistors (4), characterised by one or more strip like correction electrodes (9a,...9e) provided on at least one of said first and second flexible insulating sheets (8a, 8b) in parallel to said first and/or second opposing electrodes (2, 3), means for selectively measuring potentials of the strip like electrodes (9a,...9e), means for storing each measured potential in correspondence to the position of the respectively associated strip like electrodes, and means for correcting input coordinate data of a point of contact from the stored potentials and positions of the correction electrodes.

2. A coordinate input device comprising a first flexible insulating sheet and a second flexible insulating sheet, the first flexible insulating sheet being provided with first opposing electrodes (2, 3) at two opposing edges thereof and a first surface resistor (4) extending between the first electrodes and facing the second flexible insulating sheet, the second flexible insulating sheet being provided with second opposing electrodes (2, 3) at two opposing edges thereof and a second surface resistor (4) extending between the second electrodes and facing the first flexible insulating sheet, said edges and electrodes of the first flexible insulating sheet extending at right angles with respect to those of the second flexible insulating sheet, and means for determining X and Y coordinates of a point of contact between the first and second surface resistors (4) which is caused by pressing the first and second flexible sheets against each other at a certain point, said X and Y coordinates being determined from a division voltage of a voltage applied between said first or second opposing electrodes (2, 3), said division voltage being defined by the position of the point of contact between the first and second surface resistors (4), characterised by one or more strip like correction electrodes (9) provided on at least one of said first and second flexible insulating sheets in parallel to said first and/or second opposing electrodes (2, 3), and means adapted to apply a voltage to the correction electrodes (9), said voltage being set in accordance with the positions of the correction electrodes so as to compensate for non-linearity of the first and/or second surface resistors.

## Patentansprüche

1. Koordinateneingabevorrichtung mit einer ersten isolierenden Folie (8a) und einer zweiten isolierenden Folie (8b), wobei die erste isolierende Folie (8a) mit ersten gegenüberliegenden Elektroden (2, 3) an gegenüberliegenden Rändern und einem ersten Oberflächenwiderstand (4), der sich zwischen den ersten Elektroden erstreckt und der zweiten isolierenden Folie (8b) zugekehrt ist, versehen ist, wobei die zweite isolierende Folie (8b) mit zweiten gegenüberliegenden Elektroden (2, 3) an zwei gegenüberliegenden Rändern und einem zweiten Oberflächenwiderstand (4), der sich zwischen den zweiten Elektroden erstreckt und der ersten isolierenden Folie zugekehrt ist, versehen ist, wobei sich die Ränder und Elektroden der ersten isolierenden Folie in rechtem Winkel zu denjenigen der zweiten isolierenden Folie erstrecken, und Mitteln zum Bestimmen von X- und Y-Koordinate eines Punktes einer Berührung zwischen dem ersten und zweiten Oberflächenwiderstand (4), welche durch Pressen von erster und zweiter r Folie gegeneinander an einem bestimmten Punkt bewirkt wird, wobei die X- und Y-Koordinate anhand einer Teilspannung einer zwischen den ersten oder zweiten gegenüberliegenden Elektroden (2, 3) angelegten Spannung bestimmt werden, wobei die Teilspannung durch die Lage des Berührpunkts zwischen erstem und zweitem Oberflächenwiderstand (4) definiert ist, gekennzeichnet durch eine oder mehr streifenartige Korrekturelektroden (9a, ... 9e), die wenigstens auf einer von erster und zweiter isolierender Folie (8a), (8b) parallel zu den ersten und/oder zweiten gegenüberliegenden Elektroden (2, 3) vorgesehen sind, Mittel zum ausgewählten Messen von Potentialen der streifenartigen Elektroden (9a, 9e), Mittel zum Speichern eines jeden gemessenen Potentials in Entsprechung zur Lage der jeweils zugeordneten streifenartigen Elektroden, und Mittel zum Korrigieren von Eingabekoordinatendaten eines Berührpunkts anhand der gespeicherten Potentiale und Lagen der Korrekturelektroden.

2. Koordinateneingabevorrichtung mit einer ersten isolierenden Folie (8a) und einer zweiten isolierenden Folie (8b), wobei die erste isolierende Folie (8a) mit ersten gegenüberliegenden Elektroden (2, 3) an gegenüberliegenden Rändern und einem ersten Oberflächenwiderstand (4), der sich zwischen den ersten Elektroden erstreckt und der zweiten isolierenden Folie (8b) zugekehrt ist, versehen ist, wobei die zweite isolierende Folie (8b) mit zweiten gegenüberliegenden Elektroden (2, 3) an zwei gegenüberliegenden Rändern und einem zweiten Oberflächenwiderstand (4), der sich zwischen den zweiten Elektroden erstreckt und der ersten isolierenden Folie zugekehrt ist, versehen ist, wobei sich die Ränder und Elektroden der ersten isolierenden Folie in rechtem Winkel zu denjenigen der zweiten isolierenden Folie erstrecken, und Mitteln zum Bestimmen von X- und Y-Koordinate eines Punktes einer Berührung zwischen dem ersten und zweiten Oberflächenwiderstand (4), welche durch Pressen von erster und zweiter r Folie gegeneinander an einem bestimmten Punkt bewirkt wird, wobei die X- und Y-Koordinate anhand einer Teilspannung einer zwischen den ersten oder zweiten gegenüberliegenden Elektroden (2, 3) angelegten Spannung bestimmt werden, wobei die Teilspannung durch die Lage des Berührpunkts zwischen erstem und zweitem Oberflächenwiderstand (4) definiert ist, gekennzeichnet durch eine oder mehr streifenartige Korrekturelektroden (9a, ... 9e), die wenigstens auf einer von erster und zweiter isolierender Folie (8a), (8b) parallel zu den ersten und/oder zweiten gegenüberliegenden Elektroden (2, 3) vorgesehen sind, und Mittel, die zur Aufgabe einer Spannung auf die Korrekturelektroden (9) eingerichtet sind, wobei die Spannung nach Maßgabe der Lagen der Korrekturelektroden eingestellt wird, so daß eine Nichtlinearität des ersten und/oder zweiten Oberflächenwiderstands kompensiert wird.

**Revendications**

1. Dispositif d'entrée de coordonnées comprenant une première feuille isolante flexible (8a) et une seconde feuille isolante flexible (8b), la première feuille isolante flexible (8a) étant munie de premières électrodes opposées (2, 3) au niveau de deux de ses bords opposés et d'une première résistance de surface (4) qui s'étend entre les premières électrodes et qui fait face à la seconde feuille isolante flexible (8b), la seconde feuille isolante flexible (8b) étant munie de secondes électrodes opposées (2, 3) au niveau de deux de ses bords opposés et d'une seconde résistance de surface (4) qui s'étend entre les secondes électrodes et qui fait face à la première feuille isolante flexible, lesdits bords et lesdites électrodes de la première feuille isolante flexible s'étendant à angle droit par rapport à ceux de la seconde feuille isolante flexible, et un moyen pour déterminer des coordonnées X et Y d'un point de contact entre les première et seconde résistances de surface (4) qui est obtenu par pressage des première et seconde feuilles flexibles l'une contre l'autre en un certain point, lesdites coordonnées X et Y étant déterminées à partir d'une tension divisée d'une tension appliquée entre lesdites premières et secondes électrodes opposées (2, 3), ladite tension divisée étant définie par la position du point de contact entre les première et seconde résistances de surface (4), caractérisé par une ou plusieurs électrodes de correction en bande (9a, ..., 9e) prévues sur au moins l'une desdites première et seconde feuilles isolantes flexibles (8a, 8b) parallèlement auxdites premières et/ou secondes électrodes opposées (2, 3), par un moyen pour mesurer de façon sélective des potentiels des électrodes en bande (9a, ..., 9e), par un moyen pour stocker chaque potentiel mesuré en correspondance avec la position des électrodes en bande respectivement associées et par un moyen pour corriger des données de coordonnées d'entrée d'un point de contact à partir des potentiels et des positions des électrodes de correction.

2. Dispositif d'entrée de coordonnées comprenant une première feuille isolante flexible et une seconde feuille isolante flexible, la première feuille isolante flexible étant munie de premières électrodes opposées (2, 3) au niveau de deux de ses bords opposés et d'une première résistance de surface (4) qui s'étend entre les premières électrodes et qui fait face à la seconde feuille isolante flexible, la seconde feuille isolante flexible étant munie de secondes électrodes opposées (2, 3) au niveau de deux de ses bords opposés et d'une seconde résistance de surface (4) qui s'étend entre les secondes électrodes et qui fait face à la première feuille isolante flexible, lesdits bords et lesdites électrodes de la première feuille isolante flexible s'étendant à angle droit par rapport à ceux de la seconde feuille isolante flexible, et un moyen pour déterminer des coordonnées X et Y d'un point de contact entre es première et seconde résistances de surface (4) qui est obtenu par pressage des première et seconde feuilles flexibles l'une contre l'autre en un certain point, lesdites coordonnées X et Y étant déterminées à partir d'une tension divisée d'une tension appliquée entre lesdites premières et secondes électrodes opposées (2, 3), ladite tension divisée étant définie par la position du point de contact entre les première et seconde résistances de surface (4), caractérisé par une ou plusieurs électrodes de correction en bande (9) prévues sur au moins l'une desdites première et seconde feuilles isolantes flexibles parallèlement auxdites premières et/ou secondes électrodes opposées (2, 3) et par un moyen conçu pour appliquer une tension aux électrodes de correction (9), ladite tension étant établie en relation avec les positions des électrodes de correction de manière à compenser une non linéarité des premières et/ou secondes résistances de surface.

FIG. 1

FIG. 2

EP 0 240 666 B1

EP 0 240 666 B1

FIG. 3

FIG. 4

FIG. 5

FIG. 6

FIG. 7

FIG. 8